# EUROPEAN PATENT SPECIFICATION

(11) **EP 2 054 653 B1**
(45) Date of publication and mention of the grant of the patent: **06.01.2010**
(21) Application number: 07789111.7
(22) Date of filing: 03.08.2007
(51) Int. Cl.: F16K 21/10, F16K 1/52

(54) **IMPROVEMENTS IN OR RELATING TO TAP ADAPTORS**
VERBESSERUNGEN VON WASSERHAHNADAPTERN ODER DIESE BETREFFEND
AMÉLIORATIONS POUR ADAPTATEURS DE ROBINETS

(30) Priority: 10.08.2006 GB 0615925
(43) Date of publication of application: 06.05.2009
(73) Proprietor: Aquasmart Holdings Limited, Medway City Estate Rochester ME4 2LU (GB)
(72) Inventor: WILLIAMSON, Robert, Kent TN2 4TP (GB); COLLINS, Rob, Kent CT6 7EJ (GB)
(74) Representative: Williamson, Brian
(86) International application number: PCT/GB2007/002961
(87) International publication number: WO 2008/017813

(56) References cited:
- GB-A- 392 151
- GB-A- 2 289 933
- US-B1- 6 276 659

## Description

This invention relates to taps and is primarily concerned with adaptors for taps for use in a variety of environments from public washrooms to private homes.

One problem with taps in public washrooms is that if a conventional tap is used which can be turned on by turning the tap handle, the tap can be left on resulting in wastage of water. Attempts to solve this problem have been suggested in which a tap has to be pushed down in order to open it but the problem with this arrangement is that it is difficult to wash one's hands if one hand has to be used to hold down the tap in order to keep it open. Further, such pressed-down taps tend to become clogged with lime scale and like deposits so that, in time, only a very little amount of water flows when the tap is pressed down. Eventually, the tap can be held in the pressed down position so that water flows continuously or, in the alternative, the tap becomes so stiff that it cannot be pushed down at all.

Various delay means have been suggested in order to avoid the necessity of holding the tap down in order to keep it open while, at the same time, limiting the time in which the tap is on in order to prevent or at least limit the wastage of water. In one suggestion, an adaptor for a tap was provided which had an insert body having a central bore in which was located an actuator rod which opened the tap when depressed and which was biased to a closed position by a spring.

Return movement of the actuator rod to the closed position under the action of the spring was delayed by a piston movable in a chamber and connected to the actuator rod. A ring on the piston engaged the walls of the chamber and the frictional effect of this engagement delayed return of the actuator rod to the closed position. A major disadvantage of this arrangement is that the ring is susceptible to wear calling for frequent replacement if the delaying action was to function effectively.

In another suggestion, an actuator rod was again displaced by a pressing action to open a tap against the action of a spring which urged the actuator rod towards the closed position. In this case, return movement of the actuator rod was delayed by the engagement of a resilient ring on the actuator rod but, again, the ring was susceptible to wear so that frequent replacement is necessary if the delaying action is to function effectively.

The disadvantages of the existing taps were overcome by the applicant's earlier invention, as detailed in GB 2289933 by providing an adaptor for a tap which can be turned on and which allows water to flow with hands off operation for only a limited period of time and which avoids the use of friction rings and thereby avoids the need for frequent replacement.

However, in these days of increased water shortages tap manufacturers not only face the problem, that of the wasting of water they also face a demand from users to limit water to the amounts required for individual jobs. For example, at home, the water required to wet a toothbrush prior to use is sufficiently less than that required to wash one's hands. Therefore, it is desirable to have a one-push tap, which provides a predetermined amount of water, as described above, which can operate in two or more modes in which the volume of water dispensed is different in each mode.

According to a first aspect of the present invention there is provided a tap adapter comprising a tap head, a tap body and a plunger, the plunger being slidably mounted within the body so as to be movable from a closed position to both a first open position and a second open position; resilient means being arranged to return the plunger from either open position to said closed position, the adapter being arranged such that the return to the closed position from said first and second open positions takes different lengths of time.

Preferably, the resilient means includes a first spring and a second spring, the second spring being arranged to counteract rotational movement of the plunger away from the closed position.

Preferably, the first open position lies in line with the closed position and the second open position is rotationally offset from the closed position.

Most preferably, the tap head and tap body have cooperating means which control the movement of the plunger between the closed and open positions.

In one embodiment there is a protrusion on the inside of the tap head and a channel in the wall of the tap body, such that movement of the plunger is only possible by moving the protrusion through said channel.

In said embodiment the channel comprises a first portion of a first length and a second portion positioned adjacent, but rotationally displaced from said first portion such that the protrusion can move from said first portion to said second portion in response to the rotation of the head.

Most preferably the first portion is shorter than the second portion and said first open position is achieved when the protrusion lies at the base of said first portion and the second open position is achieved when the protrusion lies at the bottom of said second portion.

Most preferably, the length of time required for the plunger to return from the first open position to the closed position lies in the range 5 to 8 seconds and the length of time required for the plunger to return from the second open position to the closed position lies in the range 10 to 360 seconds.

According to a second aspect of the present invention there is provided tap comprising a tap base and a tap adapter, said adapter comprising a tap head, a tap body and a plunger, the plunger being slidably mounted within the body so as to be movable from a closed position to both a first open position and a second open position; resilient means being arranged to return the plunger from either open position to said closed position, the adapter being arranged such that the return to the closed position from said first and second open positions takes different lengths of time.

An embodiment of the present invention will now be further described, by way of example, with reference to the drawings, wherein:-
Figure 1 is a cross-sectional view of one embodiment of an adaptor for a prior art tap shown in the closed position;
Figure 2 is a cross-sectional view of the tap adaptor shown in Fig. 1 but showing the adaptor in an open position;
Figures 3A and 3B show valve means of the tap adaptor of Fig. 1 in open and closed positions, respectively;
Figure 4 shows a side view of an outlet part of the tap adaptor;
Figure 5 shows an exploded view of the outlet part;
Figures 6A to 6E show different designs and/or sizes of outlet parts.
Figure 7 illustrates a tap in accordance with the present invention;
Figure 8 illustrates the tap of Fig. 7, in a first open position; and
Figure 9 illustrates the tap of Fig. 7, in a second open position.

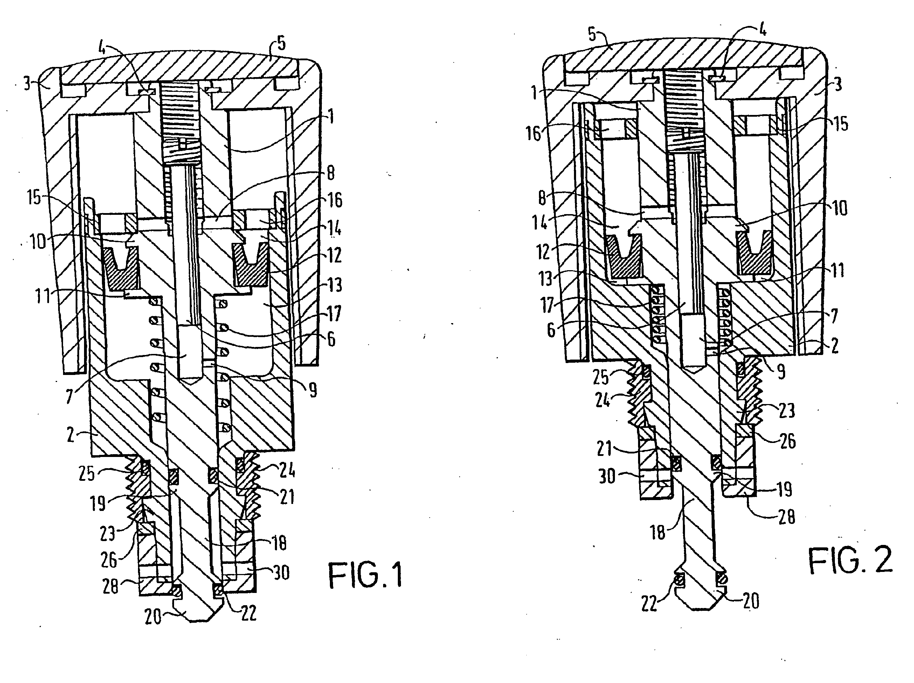

Referring to the drawings, an adaptor for a tap, as detailed in Figs. 1 to 6E comprises a cylindrical body 2 which is symmetrical about a central longitudinal axis and has a cylindrical bore concentric relative to said axis, the bore having one portion of larger diameter to form a first chamber 13 and a second chamber 14 and another portion of reduced diameter retaining spring means. Slidably mounted in the body 2 is a plunger 1 of circular cross-section which has a first portion of larger diameter within the portion of the bore of larger diameter and a second portion of reduced diameter extending through the other portion of the bore. The plunger 1 has a hollow tap head 3 mounted on a spigot on one end thereof which spigot has a circular recess around its circumference for the reception of a circlip 4 which retains the head 3 on the plunger 1. A cover 5 which may be decorative and made of metal or plastics material is a push-in tight fit in the top of the head 3 or is clipped in. The head 3 has a circular top plate with a circular hole to receive the spigot. Depending from the top plate is a cylindrical skirt which surrounds the body 2.

A control passage 7 of circular cross-section extends along the interior of the plunger 1. At one end of the passage 7 a cross-bore or aperture 9 of circular cross-section extends to the exterior of the plunger 1 and spaced therefrom and at the other end of the passage 7 two diametrically arranged and diametrically opposed apertures or holes 8 of circular cross-section extend into the chamber 14 at the exterior of the plunger 1.

Collars 10 and 11 formed on the exterior of the plunger 1 retain a circular cup seal 12 of V-shaped cross-section. The seal 12 forms on one of its sides one end of the chamber 13 within the body 2 and on its other side one,end of the second chamber 14 formed within the body 2. The other end of the second chamber 14 is formed by a retaining cap 15 mounted on the body 2 and having apertures 16 for the passage of air. Between the collar 11 and a wall formed by an end or portion of the interior of the body 2 of reduced cross-section relative to the interior of the body 2 forming the chamber 13, there is arranged the spring means in the form of a coil spring 17.

A bore extends along the interior of the plunger 1 and one end of the bore forms the control passage 7. At the end of the plunger adjacent the spigot the bore is internally screw-threaded. A needle valve 6 has a screw-threaded boss 6A corresponding to the thread of the threaded portion of the bore. The needle valve is of metal or plastics material or may be moulded from plastics material with a tapered bore made during moulding. The needle valve 6 extends into the control passage 7 with the boss 6A engaging the internal screw-threading of the plunger 1. Rotation of the boss 6A causes the needle valve 6 to move along the bore of the plunger 1.

At the end of the plunger 1 remote from its end attached to the head 3 there is provided a tubular portion 18 of reduced cross-section relative to the parts of the plunger containing the needle valve 6. The tubular portion 18 has a frusto-conical collar 19 at one end thereof and a head 20 at the other end thereof, the collar 19 being provided with a rubber ring seal 21 and the head 20 being provided with a rubber ring seal 22. Surrounding the portion 18 is a cylindrical extension 23 projecting from the body 2.

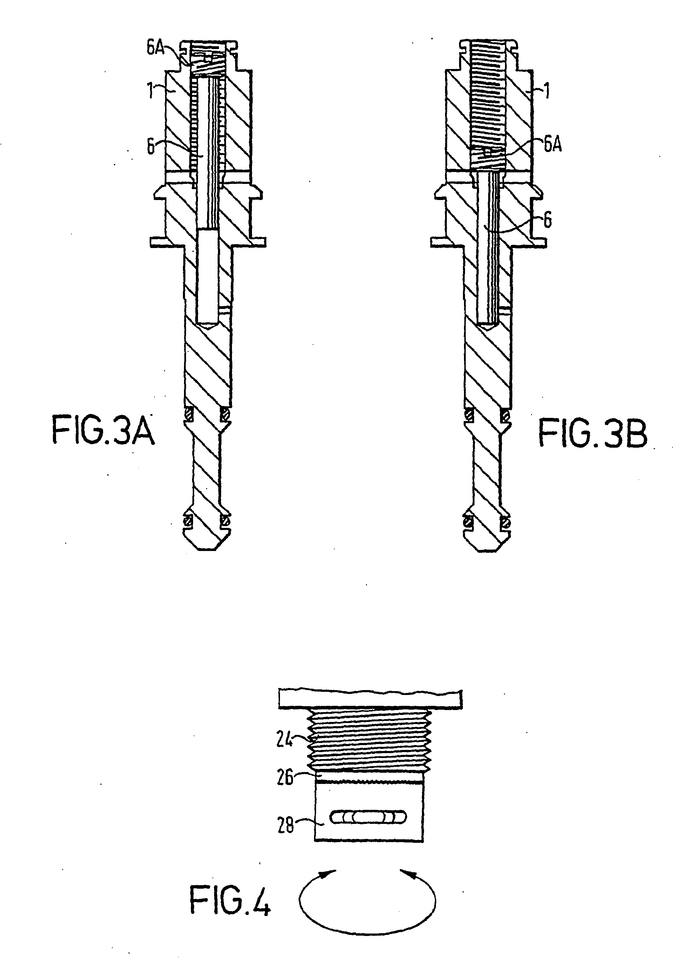

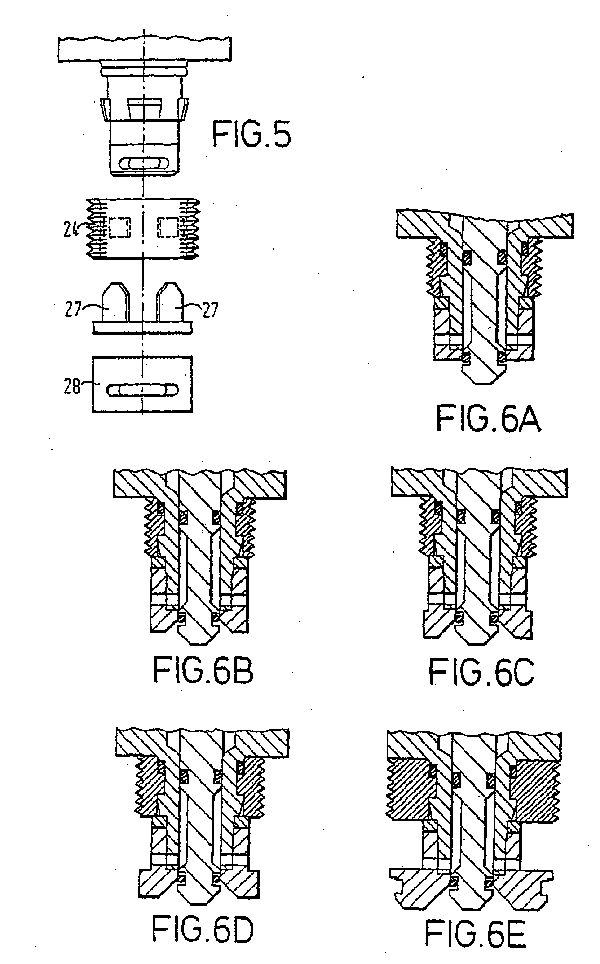

As shown in Figure 5 the extension 23 has bayonets which fit into apertures of and locate an interchangeable thread member 24 to prevent rotation thereof, with a rubber ring seal 25 interposed between extension 23 and member 24. A thread retainer 26 has tines 27 which lock the thread member 24 in position and has a crown gear meshing with a corresponding gear on an interchangeable restrictor 28 which is clipped onto the extension 23. As shown by Figure 4 the restrictor 28 is rotationally adjustable prior to final location to adjust aperture alignment and thus eventual water flow rate.

The adaptor for a tap as described above operates as follows:
1. Pushing plunger 1 down evacuates chamber 13 allowing air to pass seal 12 while allowing air into chamber 14 via aperture 16.
2. Upon release of the plunger the spring 17 forces the plunger up to create a low pressure resistance in chamber 13 maintained by seals 12 and 21 but allowing air to slowly leak through apertures 8 and aperture 9 via the adjustable tapered needle valve.
3. The time delay is created by adjusting the flow of air passing through the tapered needle valve from inlet aperture 8 to aperture 9.
4. The water flows in the direction of arrow X via outlet 30 in the direction of arrow Y. The water is shut off by seal 22 when plunger 1 is pushed back up.

As shown in Figures 3A and 3B the needle valve 6 is adjustable between two limit positions. The needle valve 6 by means of its screw-threaded boss 6A engages the screw thread in the plunger 1. The boss 6A can be turned with a screwdriver or like tool to move the valve 6 along the plunger. The needle has a machined bore of constant cross-section or is moulded with a tapered bore, the larger cross-section of the bore being towards the boss end of the needle. In the position shown in Figure 3A the turning off of the tap is almost instantaneous whereas in the position show in Figure 3B there is the longest delay.

Figures 6A to6E show various designs and/or sizes of thread members and restrictors to suit existing tap mountings. The body 2 and operating mechanism are standard for all taps and mountings.

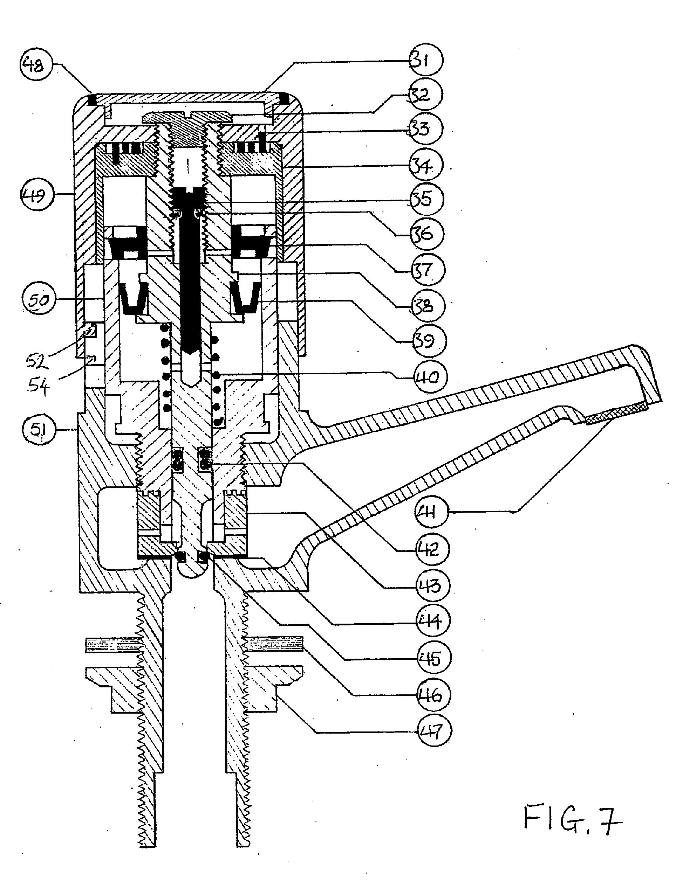

Figure 7 illustrates a tap adaptor, in accordance with the present invention. Although the needle valve 6 in the tap described above, with reference to Figs 1 to 6E, can be set in any one position along a continuum prior to use, the tap when set for use can only be arranged to provide a single pre-set volume of water. This means that should a user wish to dispense a different volume of water that the needle valve 6 would have to be readjusted prior to use of the tap.

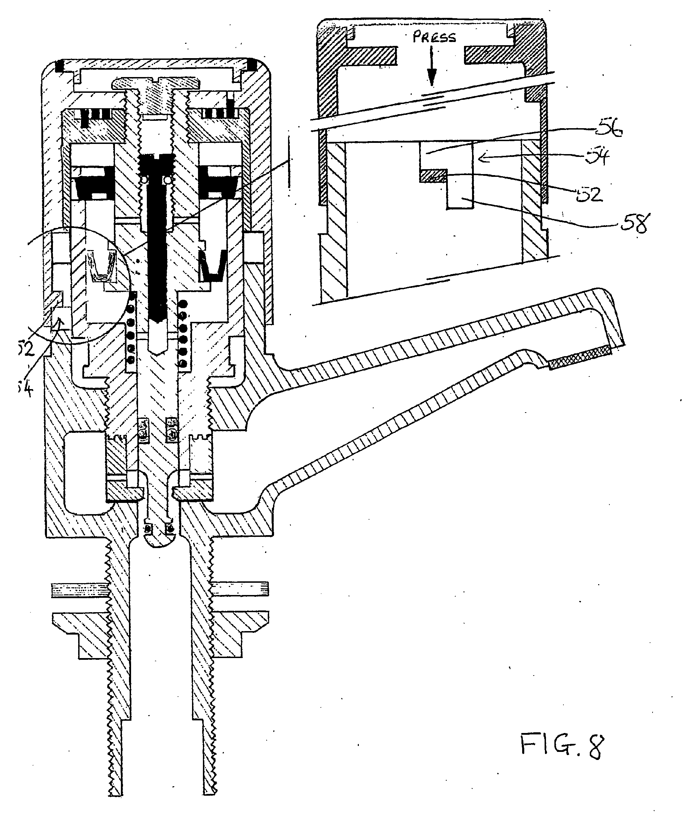

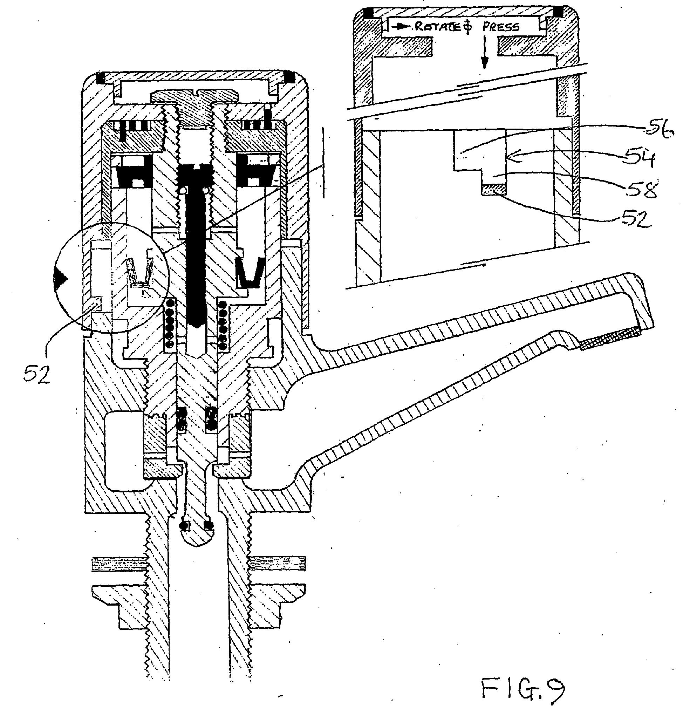

Figure 7 illustrates a tap in accordance with the present invention in which this is not the case. Figures 8 and 9 illustrate the tap of Figure 7 in two separate operating or open positions, as will be described in detail below.

The tap can be thought of as a whole entity suitable for controlling the flow of a fluid. To this end the operation of the substantial part of the tap will operate as the prior art tap described previously herein. However, the tap can also be thought of as a tap base 51 and a tap adapter. The tap base would be coupled to the plumbing system in a house or public washroom and the tap adapter could be retrofitted thereto in order to upgrade an existing tap to use the adapter of the present invention. The tap base would be any tap base designed to comply with appropriate national plumbing standards. The tap adapter, when in use, will be arranged to fit to any such tap base.

Figure 7, illustrates the component parts of the tap, which are numbered as follows:

| | |
|---|---|
| 31 | Cap Insert |
| 32 | Head Retaining Screw |
| 33 | Head Return Spring |
| 34 | Shroud |
| 35 | Needle Valve |
| 36 | Needle Valve O Ring |
| 37 | Retainer |
| 38 | Plunger |
| 39 | Cup Seal |
| 40 | Plunger Return Spring |
| 41 | Spout Spray Diffuser |
| 42 | Plunger O Rings |
| 43 | Flow Restrictor |
| 44 | Optional Seating Washer |
| 45 | Restrictor O Ring |
| 46 | Tap/Basin Seating Washer |
| 47 | Tap/Basin Retaining Nut |
| 48 | Hot/Cold Identification Ring |
| 49 | Tap Head |
| 50 | Tap Body |
| 51 | Tap Base |
| 52 | Protrusion |

The tap adapter comprises a tap head 49, a tap body 50 and a plunger 38. The plunger 38 is slidably mounted within the body 50 so as to be movable from a closed position as illustrated in Figure 7 to both a first open position as illustrated in Figure 8 and a second open position as illustrated in Figure 9.

Resilient means in the form of a first spring 40 and second spring 33 are arranged to return the plunger from either open position to the closed position.

As will become clear with a review of the adapter as illustrated in Figures 8 and 9, the adapter is arranged such that the return to the closed position from said first and second open positions takes different lengths of time.

Figure 8 illustrated the adapter in which the plunger 38 is in the first open, which lies in line with the closed position but extended therefrom by the partial compression of the spring 40. This can be achieved as will be discussed below by a user asserting a force directly down on the head 49, in line with the axis of the plunger 38.

Figure 9 illustrates the adapter in which the plunger 38 is in the second open position, which lies rotationally offset from the closed position. This can be achieved as will also be discussed below by a user first rotating the head 49 with respect to the axis of the plunger 38, prior to asserting a force directly down on the head 49, in line with the axis of the plunger 38.

As can be seen in more detail in Figure 8 this control of the movement of the plunger is achieved through the tap head 49 and tap body 50 having cooperating means which control the movement of the plunger 38 between the closed and open positions. In particular, there is a protrusion 52 on the inside of the tap head 49 and a corresponding channel 54 in the wall of the tap body 50, such that movement of the plunger is only possible by moving the protrusion 52 through said channel 54. The channel 54 comprises a first portion 56 of a first length and a second portion 58, of a second length, positioned adjacent, but rotationally displaced from, said first portion 56 such that the protrusion 52 can move from said first portion to said second portion in response to the rotation of the head 50. The first portion 56 is shorter than the second portion 58, although this is a matter of choice. The first open position is achieved when the protrusion 52 lies at the base of said first portion 56 and the second open position is achieved when the protrusion 52 lies at the bottom of the second portion 58.

The length of time required for the plunger to return from the first open position to the closed position lies in the range 5 to 8 seconds. The length of time required for the plunger to return from the second open position to the closed position lies in the range 10 to 360 seconds.

The volume of water passed by the tap in each action is set both by the length of the first and second portions 56 & 58, by the tension of the spring and by the position of the restrictor 28 as illustrated in relation to the prior art tap, when adapted for use in the dual action tap described herein.

When in use a person wishing a short burst of water will strike the tap from above causing a downward movement of the tap head 49 and plunger 38 into said first open position, at the base of the first portion 56. If a user wishes a larger volume of water to be passed he or she will first rotate the head 49 and therefore the plunger 38 and thereafter urge the tap downwards into said second open position, at the base of the second portion 58.

Modifications can be incorporated without departing from the invention as claimed. For example, the invention also extends to taps fitted with the adaptor above-described.

## Claims

1. A tap adapter comprising a tap head (49), a tap body (50) and a plunger (38), the plunger (38) being slidably mounted within the body (50) so as to be movable from a closed position to both a first open position and a second open position; resilient means (33, 40) being arranged to return the plunger from either open position to said closed position, the adapter being arranged such that the return to the closed position from said first and second open positions takes different lengths of time.

2. A tap adapter as claimed in claim 1, wherein the resilient means is a spring (44).

3. A tap adapter as claimed in claim 2, wherein the resilient means includes a second spring (33) arranged to counteract rotational movement of the plunger (38) away from the closed position.

4. A tap adapter as claimed in any preceding claim, wherein the first open position lies in line with the closed position.

5. A tap adapter as claimed in claim 3, wherein the second open position is rotationally offset from the closed position.

6. A tap adapter as claimed in any preceding claim, wherein the tap head (49) and tap body (50) have cooperating means which control the movement of the plunger (38) between the closed and open positions.

7. A tap adapter as claimed in claim 6, wherein there is a protrusion (52) on the inside of the tap head (49) and a channel (54) in the wall of the tap body (50), such that movement of the plunger is only possible by moving the protrusion through said channel (54).

8. A tap adapter as claimed in claim 7, wherein the channel (54) comprises a first portion (56) of a first length and a second portion (56) positioned adjacent, but rotationally displaced from said first portion (54) such that the protrusion (52) can move from said first portion to said second portion (58) in response to the rotation of the head (50).

9. A tap adapter as claimed in claim 8, wherein the first portion (54) is shorter than the second portion (58) and said first open position is achieved when the protrusion (52) lies at the base of said first portion and the second open position is achieved when the protrusion lies at the bottom of said second portion (58).

10. A tap adapter as claimed in any proceeding claim, wherein the length of time required for the plunger to return from the first open position to the closed position lies in the range 5 to 8 seconds.

11. A tap adapter as claimed in any preceding claim, wherein the length of time required for the plunger to return from the second open position to the closed position lies in the range 10 to 360 seconds.

12. A tap comprising a tap base (51), a tap head (49), a tap body (50) and a plunger (38), the plunger (38) being slidably mounted within the body (50) so as to be movable from a closed position to both a first open position and a second open position; resilient means (33, 40) being arranged to return the plunger from either open position to said closed position, the adapter being arranged such that the return to the closed position from said first and second open positions takes different lengths of time.

## Patentansprüche

1. Hahnadapter, umfassend einen Hahnkopf (49), einen Hahnkörper (50) und einen Kolben (38), wobei der Kolben (38) gleitbar montiert ist in dem Körper (50), um beweglich zu sein von einer geschlossenen Position zu sowohl einer ersten geöffneten Position als auch zu einer zweiten geöffneten Position; wobei ein Rückstellmittel (33, 40) angeordnet ist, um den Kolben von einer geöffneten Position zu der geschlossenen Position zurückzustellen, wobei der Adapter so angeordnet ist, dass das Rückstellen zu der geschlossenen Position von den ersten und zweiten geöffneten Positionen unterschiedliche Zeitlängen in Anspruch nimmt.

2. Hahnadapter gemäß Anspruch 1, wobei das Rückstellmittel eine Feder (44) ist.

3. Hahnadapter gemäß Anspruch 2, wobei das Rückstellmittel eine zweite Feder (33) umfasst, angeordnet, um einer Drehbewegung des Kolbens (38) weg von der geschlossenen Position entgegenzuwirken.

4. Hahnadapter gemäß einem der vorherigen Ansprüche, wobei die erste geöffnete Position ausgerichtet ist mit der geschlossenen Position.

5. Hahnadapter gemäß Anspruch 3, wobei die zweite geöffnete Position drehversetzt ist von der geschlossenen Position.

6. Hahnadapter gemäß einem der vorherigen Ansprüche, wobei der Hahnkopf (49) und der Hahnkörper (50) zusammenwirkende Mittel aufweisen, die die Bewegung des Kolbens (38) zwischen der geschlossenen und den geöffneten Positionen steuern.

7. Hahnadapter gemäß Anspruch 6, wobei ein Vorsprung (52) an der Innenseite des Hahnkopfs (49) vorgesehen ist und ein Kanal (54) in der Wand des Hahnkörpers (50), so dass eine Bewegung des Kolbens nur möglich ist mittels Bewegens des Vorsprungs durch den Kanal (54).

8. Hahnadapter gemäß Anspruch 7, wobei der Kanal (54) einen ersten Abschnitt (56) einer ersten Länge und einen zweiten Abschnitt (56) aufweist, der benachbart positioniert ist, jedoch drehversetzt ist von dem ersten Abschnitt (54), so dass der Vorsprung (52) sich bewegen kann von dem ersten Abschnitt zu dem zweiten Abschnitt (58) in Reaktion auf die Drehung des Kopfs (50).

9. Hahnadapter gemäß Anspruch 8, wobei der erste Abschnitt (54) kürzer ist als der zweite Abschnitt (58) und die erste geöffnete Position erreicht wird, wenn der Vorsprung (52) an der Basis des ersten Abschnitts liegt, und die zweite geöffnete Position erreicht wird, wenn der Vorsprung an dem Boden des zweiten Abschnitts (58) liegt.

10. Hahnadapter gemäß einem der vorherigen Ansprüche, wobei die Zeitlänge, die für den Kolben erforderlich ist, um von der ersten geöffneten Position zu der geschlossenen Position zurückzukehren, im Bereich 5 bis 8 Sekunden liegt.

11. Hahnadapter gemäß einem der vorherigen Ansprüche, wobei die Zeitlänge, die für den Kolben erforderlich ist, um von der zweiten geöffneten Position zu der geschlossenen Position zurückzukehren, im Bereich 10 bis 360 Sekunden liegt.

12. Hahn, umfassend eine Hahnbasis (51), einen Hahnkopf (49), einen Hahnkörper (50) und einen Kolben (38), wobei der Kolben (38) gleitbar montiert ist in dem Körper (50), um beweglich zu sein von einer geschlossenen Position zu sowohl einer ersten geöffneten Position als auch zu einer zweiten geöffneten Position; wobei ein Rückstellmittel (33, 40) angeordnet ist, um den Kolben von einer geöffneten Position zu der geschlossenen Position zurückzustellen, wobei der Adapter so angeordnet ist, dass das Rückstellen zu der geschlossenen Position von den ersten und zweiten geöffneten Positionen unterschiedliche Zeitlängen in Anspruch nimmt.

## Revendications

1. Adaptateur de robinet, comprenant une tête (49) de robinet, un corps (50) de robinet et un plongeur (38), le plongeur (38) étant monté coulissant dans le corps (50) de manière à pouvoir se déplacer d'une position fermée à la fois à une première position ouverte et à une deuxième position ouverte ; des moyens (33, 40) élastiques étant conçus pour ramener le plongeur de l'une ou l'autre des positions ouvertes à la position fermée, l'adaptateur étant conçu de façon à ce que le retour à la position fermée à partir de la première et de la deuxième positions ouvertes prennent des longueurs de temps différentes.

2. Adaptateur de robinet suivant la revendication 1, dans lequel les moyens élastiques sont un ressort (44).

3. Adaptateur de robinet suivant la revendication 2, dans lequel les moyens élastiques comprennent un deuxième ressort (33) conçu pour contrarier un mouvement de rotation du plongeur (38) l'éloignant de la position fermée.

4. Adaptateur de robinet suivant l'une quelconque des revendications précédentes, dans lequel la première position ouverte est en ligne avec la position fermée.

5. Adaptateur de robinet suivant la revendication 3, dans lequel la deuxième position ouverte est décalée en rotation de la position fermée.

6. Adaptateur de robinet suivant l'une quelconque des revendications précédentes, dans lequel la tête (49) du robinet et le corps (50) du robinet ont des moyens de coopération, qui règlent les mouvements du plongeur (38) entre les positions fermée et ouvertes.

7. Adaptateur de robinet suivant la revendication 6, dans lequel il y a une saillie (52) sur l'intérieur de la tête (49) du robinet et un canal (54) dans la paroi du corps (50) du robinet, de sorte que le mouvement du plongeur est possible seulement en déplaçant la saillie dans le canal (54).

8. Adaptateur de robinet suivant la revendication 7, dans lequel le canal (54) comprend une première partie (56) d'une première longueur et une deuxième partie (56) en position voisine, mais décalée en rotation de la première partie (54) de sorte que la saillie (52) peut se déplacer de la première partie à la deuxième partie (56) en réaction à la rotation de la tête (50).

9. Adaptateur de robinet suivant la revendication 8, dans lequel la première partie (54) est plus courte que la deuxième partie (58) et la première position ouverte est atteinte lorsque la saillie (52) se trouve à la base de la première partie, et la deuxième position ouverte est atteinte lorsque la saillie se trouve au fond de la deuxième partie (58).

10. Adaptateur de robinet suivant l'une quelconque des revendications précédentes, dans lequel la longueur du temps nécessaire, pour que le plongeur revienne de la première position ouverte à la position fermée, est comprise entre 5 et 8 secondes.

11. Adaptateur de robinet suivant l'une quelconque des revendications précédentes, dans lequel la longueur du temps nécessaire, pour que le plongeur revienne de la deuxième position ouverte à la position fermée, est comprise entre 10 et 360 secondes.

12. Robinet comprenant une embase (51) de robinet et une tête (49) de robinet, un corps (50) de robinet et un plongeur (38), le plongeur (38) étant monté coulissant dans le corps (50) de manière à se déplacer d'une position fermée à la fois à une première position ouverte et à une deuxième position ouverte ; des moyens (33, 40) élastiques étant conçus pour ramener le plongeur de l'une ou l'autre des positions ouvertes à la position fermée, l'adaptateur étant conçu de façon à ce que le retour à la position fermée à partir de la première et de la deuxième positions ouvertes prennent des longueurs de temps différentes.
